# EUROPÄISCHE PATENTSCHRIFT

(11) **EP 1 371 542 B1**
(45) Veröffentlichungstag und Bekanntmachung des Hinweises auf die Patenterteilung: **03.01.2007**
(21) Anmeldenummer: 03012841.7
(22) Anmeldetag: 06.06.2003
(51) Int. Cl.: B62D 15/02, F15B 15/28

(54) **Winkelsensor zur Erfassung des Lenkwinkels eines Lenksystems**
Angle sensor for sensing the steering angle of a steering system
Capteur d'angle pour la détection de l'angle de braquage d'un système de direction

(30) Priorität: 12.06.2002 US 170610
(43) Veröffentlichungstag der Anmeldung: 17.12.2003
(73) Patentinhaber: DEERE & COMPANY, Moline, Illinois 61265-8098 (US)
(72) Erfinder: Adams, Lawrence J., Rock Island, IL 61201 (US); Nelson, Frederick William, Waukee, IL 50263 (US)
(74) Vertreter: Holst, Sönke

(56) Entgegenhaltungen:
- DE-C- 19 616 437
- DE-U- 29 616 034
- PATENT ABSTRACTS OF JAPAN vol. 2000, no. 20, 10. Juli 2001 (2001-07-10) & JP 2001 082417 A (NISSHIN STEEL CO LTD), 27. März 2001 (2001-03-27)

## Beschreibung

Die Erfindung betrifft ein Lenksystem, das einen Lenkzylinder, der mit einem lenkbaren Rad in Antriebsverbindung steht und mit einem Lenkventil verbunden ist, und einen Winkelsensor zur Erfassung des Lenkwinkels umfasst. Ein derartiges Lenksystem ist zum Beispeil aus der DE 19616437C bekannt.

Hydraulische Lenksysteme sind an sich bekannte Einrichtungen lenkbarer Fahrzeuge. Bei einem typischen hydraulischen Lenksystem verstellt ein Bediener manuell die Position eines Lenkmechanismus, wie z. B. eines Lenkrades. Diese Handlung bewirkt, dass ein Lenkventil den Fluss eines hydraulischen Fluids verändert, der von einer Pumpe einem Lenkzylinder bereitgestellt wird. Diese Änderung im Fluss des hydraulischen Fluids hat eine Änderung der Richtung der gelenkten Räder zur Folge. Es ergeben sich jedoch Probleme bei der Entwicklung automatischer Lenksysteme. Insbesondere muss ein automatisches Lenksystem den Winkel des gelenkten Rades feststellen oder messen, um die Lenkung des Fahrzeugs zu überwachen und/oder zu steuern.

Ein Problem beim Messen eines Winkels eines gelenkten Rades besteht darin, dass die Räder und die Achse des gelenkten Rades potentiell ungünstigen Umweltbedingungen ausgesetzt sind. Dadurch wird die Anbringung der Messsysteme oder Sensoren schwierig. Umweltbedingungen wie Schmutz oder Wasser können die Genauigkeit der Messungen des Sensors nachteilig beeinflussen oder den Sensor beschädigen. Bei einigen im Stand der Technik bekannten Lösungen sind Sensoren im Lenkzylinder angeordnet, um die Position des Lenkzylinders zu erfassen. Die Anordnung des Sensors im Lenkzylinder setzt den Sensor ebenfalls ungünstigen Bedingungen aus.

Die DE 196 15 437 C beschreibt ein Lenksystem, bei dem der Hub eines Kolbens in einem Lenkzylinder durch einen Sensor erfasst und als Rückkopplungssignal an eine Regelschaltung gegeben wird.

Die JP 2001 082 417 A beschreibt eine Messeinrichtung zur Erfassung der Position eines Zylinders, bei der die in die Kammern des Zylinders hinein oder daraus hinaus strömenden Flussmengen des hydraulischen Fluids durch Flussmesser erfasst und in einer Rechnereinrichtung zur Berechnung der Position des Kolbens verwendet werden. Diese Druckschrift betrifft keine Lenkeinrichtung.

Die der Erfindung zu Grunde liegende Aufgabe wird darin gesehen, ein Lenksystem bereitzustellen, das ein Mittel zur Bestimmung des Lenkwinkels aufweist, das nicht unbedingt nahe der gelenkten Achse oder den gelenkten Rädern anzubringen ist.

Diese Aufgabe wird erfindungsgemäß durch die Lehre des Patent anspruchs 1 gelöst, wobei in den weiteren Patentansprüchen Merkmale aufgeführt sind, die die Lösung in vorteilhafter Weise weiterentwickeln.

Es wird ein Lenksystem vorgeschlagen, das eingerichtet ist, den Lenkwinkel eines lenkbaren Rades eines Fahrzeugs zu erfassen. Das Fahrzeug weist ein Paar beabstandeter Räder auf (oder ein einzelnes lenkbares Rad), die an einer Lenkachse angeordnet sind. Ein in der Regel doppelt wirkender Lenkzylinder ist betriebsmäßig mit den lenkbaren Rädern gekoppelt, um ihren Lenkwinkel vorzugeben. Denkbar wäre auch eine Verwendung eines einfach wirkenden Lenkzylinders, der mit einer Feder oder einem zweiten Lenkzylinder zusammenwirkt, um einen hinreichenden Lenkwinkelbereich zu erzielen. Der Lenkzylinder ist mit einem hydraulischen Kreis verbunden, der ein Lenkventil und eine damit verbundene Quelle zur Bereitstellung unter Druck stehenden Fluids umfasst, in der Regel einer Pumpe. Der Lenkzylinder hat eine in gegenüberliegende Richtungen bewegliche Kolbenstange, um die Räder in eine von zwei möglichen Richtungen zu bewegen. Es wird ein Winkelsensor vorgeschlagen, der den hydraulischen Fluss erfasst, der in den Lenkzylinder hineingeht oder aus ihm herausfließt. Da dieser Fluss eine Information über den jeweiligen Lenkwinkel enthält, ist der Winkelsensor zur Erfassung des Lenkwinkels geeignet.

Auf diese Weise erreicht man eine Erkennung des Lenkwinkels, die als Rückkopplung für eine Regelschleife eines automatischen Lenksystems verwendet werden kann. Außerdem ist es bei der vorliegenden Erfindung nicht erforderlich, die Sensoren direkt mit den lenkbaren Rädern zu verbinden. Funktionselemente, einschließlich des Winkelsensors, können in hinreichendem Abstand von der lenkbaren Achse des Fahrzeugs und somit an einer geschützten Stelle angeordnet werden.

Der Winkelsensor dient zur Erfassung des Flusses in den Lenkzylinder und daraus hinaus. Es können beliebige geeignete Flusssensoren verwendet werden, z. B. Flügelräder, wie sie zum Abmessen von Kraftstoffen verwendet werden. Bei einer bevorzugten Ausführungsform der Erfindung ist der Winkelsensor ein hydraulischer Motor, der durch den Fluss angetrieben wird. Der Motor hat eine Ausgangswelle, deren Bewegung durch einen geeigneten Sensor erfasst wird.

Der Sensor kann die Drehrichtung der Ausgangswelle erfassen, um festzustellen, in welche Richtung sich der Lenkzylinder jeweils bewegt. Falls der Fluss stets konstant ist, was beispielsweise bei nur ein- und ausschaltenden Lenkventilen (z. B. 2-Wegeventilen) der Fall ist, würde eine Erkennung der Zeitdauer einer Drehung und ihrer Richtung zur Erkennung des Lenkwinkels hinreichen. Insbesondere bei einer Verwendung eines Proportionalventils als Lenkventil ist es hingegen angebracht, auch den Betrag der Drehung der Ausgangswelle durch den Sensor zu erfassen. Es wird somit die Richtung und Geschwindigkeit bzw. die Drehwinkeländerung der Ausgangswelle erfasst.

Zur Erfassung der Drehung der Ausgangswelle kann ein darauf angeordnetes, verzahntes Rad dienen. Der Sensor wirkt mit den Zähnen und den dazwischenliegenden Lücken zusammen.

Bei dem Sensor kann es sich um einen magnetisch sensitiven Sensor handeln, z. B. ein Reedrelais oder einen Halleffektsensor, der durch die magnetischen Eigenschaften des Rads angesteuert wird.

Um die Drehrichtung der Ausgangswelle erkennen zu können, ist die Verwendung zweier Sensoren sinnvoll. Die Sensoren sind vorzugsweise in einer Quadraturanordnung angebracht, d. h. sie sind eingerichtet, bei einer Drehung der Ausgangswelle des Motors phasenverschobene Signale abzugeben. Anhand der Phase der von den Sensoren abgegebenen Signale kann durch eine geeignete elektronische Schaltung die Drehrichtung erkannt werden.

In den Zeichnungen sind zwei nachfolgend näher beschriebene Ausführungsbeispiele der Erfindung dargestellt. Es zeigt:
- Fig. 1: ein Schema, in dem ein erfindungsgemäßes Lenksystem dargestellt ist,
- Fig. 2: eine Vorderansicht eines erfindungsgemäßen Lenkwinkelsensors,
- Fig. 3: eine Draufsicht auf einen erfindungsgemäßen Lenkwinkelsensor, und
- Fig. 4: eine Draufsicht ähnlich Figur 1, in der eine alternative Ausführungsform der Erfindung gezeigt wird.

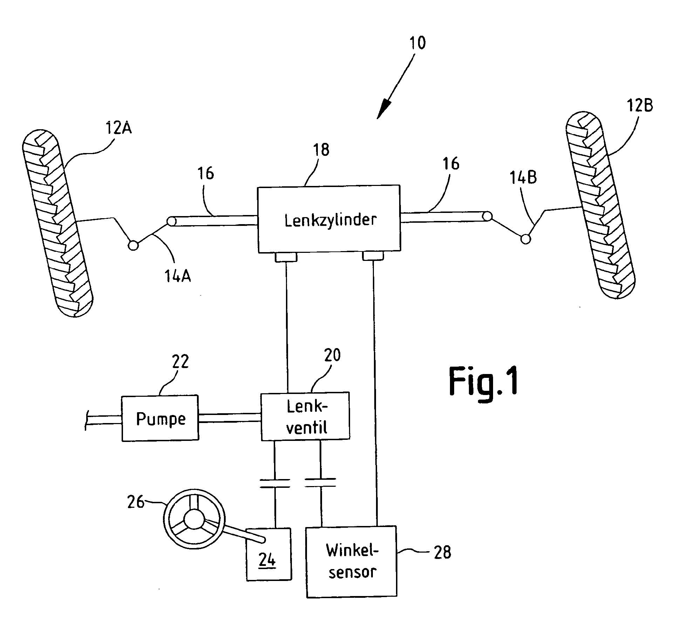

Die vorliegende Erfindung schlägt ein Lenksystem vor, das eine Erfassung des Winkels eines gelenkten Rades in einem hydraulischen Lenksystem ermöglicht. Wie in der Figur 1 gezeigt, umfasst das Lenksystem 10 Räder 12A und 12B. Jedes dieser Räder ist über ein Gestänge 14 (d. h. 14A und 14B) mit einem doppelt wirkenden Lenkzylinder 18 verbunden. Der doppelt wirkende Lenkzylinder 18 weist eine einzige bewegliche Stange 16 auf, die sich in entgegengesetzte Richtungen bewegen kann, um die Räder 12A und 12B in eine von zwei Winkelrichtungen (d. h. nach links oder rechts) zu lenken.

Der hydraulische Lenkzylinder 18 bildet einen Teil eines hydraulischen Kreises. Der hydraulische Kreis umfasst ein hydraulisches 2-Wege-Lenkventil 20, das hydraulisch mit dem Lenkzylinder 18 verbunden ist. Das 2-Wege-Lenkventil 20 ist außerdem mit einer hydraulischen Pumpe 22 hydraulisch verbunden. Die Pumpe 22 dient dazu, unter Druck stehendes Fluid für den hydraulischen Kreis bereitzustellen.

Die vorliegende Erfindung sieht außerdem vor, dass das Lenkventil 20 über eine Lenksäule 24 mit einem Lenkmechanismus 26, wie einem Lenkrad, verbunden ist. Dadurch wird ein manuell gesteuertes Lenken auf konventionelle Weise ermöglicht, falls manuelles Lenken wünschenswert ist. Bei einer anderen Ausführungsform wird das Lenkventil 20 elektromagnetisch angesteuert und durch einen Sensor zur Erfassung des Winkels des Lenkmechanismus oder eine selbsttätige Lenkeinrichtung kontrolliert.

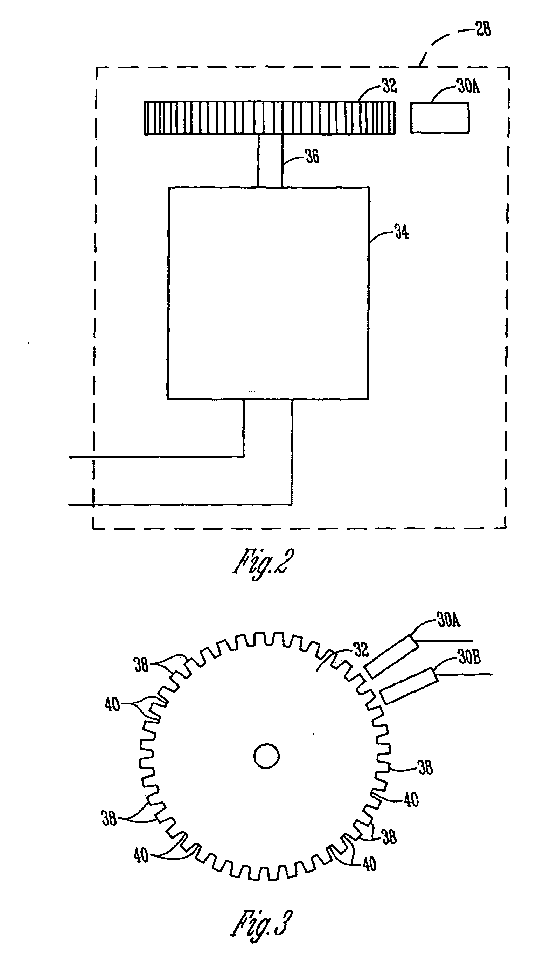

Das Lenkventil 20 ist vorzugsweise an der Unterseite der Lenksäule 24 angebracht. Mit dem Lenkventil 20 ist außerdem ein Winkelsensor 28 verbunden. Der Winkelsensor 28 ist auch hydraulisch mit dem Lenkzylinder 18 verbunden. Der Winkelsensor 28 ist am besten in der Figur 2 dargestellt. Der Winkelsensor 28 ist am Fahrzeugrahmen, einer Fahrzeugachse, in der Kabine des Fahrzeugs oder an einer beliebigen anderen Stelle des Fahrzeugs angebracht.

Gemäß der Figur 2 ist der Winkelsensor 28 mit einem hydraulischen Motor 34 versehen, der in dem hydraulischen Kreis zwischen dem Lenkzylinder 18 und dem Lenkventil 20 angeordnet ist. Der hydraulische Motor 34 hat eine Ausgangswelle 36. Diese Ausgangswelle 36 des Motors 34 ist eingerichtet, in eine von zwei Richtungen zu drehen, abhängig von der Richtung des Flusses des Fluids durch den hydraulischen Motor 34. Durch eine Messung der Bewegung der Ausgangswelle 36 des Motors 34 und ihrer Richtung wird der Lenkwinkel erfasst.

Das Verhältnis zwischen der Bewegung der Ausgangswelle 36 des Motors 34 und dem Lenkwinkel ist durch die Änderung des Lenkwinkels gegenüber dem Betrag der Änderung der Motorwellenposition gegeben und kann abhängig von den verwendeten Komponenten variieren. Die Änderung des Flusses des Fluids vom Lenkzylinder entspricht Änderungen im Fluidfluss durch den hydraulischen Motor 34, so dass ein Verhältnis zwischen der Bewegung der Ausgangswelle 36 und dem Lenkwinkel vorliegt. Wenn ein Bediener beispielsweise in eine Richtung lenkt, gibt es einen größeren Fluss in den Lenkzylinder 18 und daher einen größeren Lenkwinkel. Der Fluidfluss zum hydraulischen Motor 34 vergrößert sich auch, was eine vergrößerte Drehgeschwindigkeit der Ausgangswelle 36 zur Folge hat.

Um die Bewegung und Richtung der Ausgangswelle 36 des Motors 34 zu messen, wird ein Paar an Sensoren 30 (d. h. 30A und 30B) nahe der Ausgangswelle 36 verwendet, wie am besten anhand der Figur 3 erkennbar ist. In der Figur 3 ist ein verzahntes Rad 32 mit der Ausgangswelle 36 verbunden. Die Sensoren 30A und 30B sind in der Nähe des verzahnten Rades 32 angeordnet. Die Sensoren können magnetische Sensoren sein, wie Halleffektsensoren. Die Sensoren 30 sind in einer Quadraturanordnung angebracht und können somit verwendet werden, Übergänge zwischen Zähnen 38 und Lücken 40 des verzahnten Rades 32 zu messen. Bei dieser Anordnung werden die Sensoren 30 verwendet, den Betrag der Drehung zu messen, wie beispielsweise durch Zählen der Anzahl der Zähne 38, die an einem oder beiden der Sensoren 30 in einem gegebenen Zeitraum vorbeilaufen. Außerdem ist auch eine Änderung der Drehrichtung nachweisbar, da diese Anordnung es ermöglicht, die Übergänge zwischen den Zähnen 38 und den nicht-verzahnten Abschnitten (Lücken 40) des verzahnten Rades 32 zu detektieren und zu evaluieren.

Obwohl vorzugsweise ein verzahntes Rad 32 verwendet wird, können im Rahmen des erfindungsgemäßen Gedankens auch Messungen an der Ausgangswelle 36 durchgeführt werden, anstelle am verzahnten Rad 32, das mit der Ausgangswelle 36 verbunden ist. Falls ein verzahntes Rad 32 verwendet wird,, ist eine geeignete Größe eines verzahnten Rades ein Durchmesser von 127 mm, aber jede andere Größe ist ebenfalls möglich. Es können auch andere Typen und Anbringungen von Sensoren genutzt werden.

Diese Konfiguration hat eine Reihe an Vorteilen. Da die Drehrichtung und der Betrag der Drehung des Motors 34 Änderungen im Fluidfluss in den Lenkzylinder 18 entspricht, ist ein Verhältnis zwischen der Bewegung der Ausgangswelle 36 und dem Lenkwinkel gegeben. Wenn ein Bediener beispielsweise in eine Richtung lenkt, gibt es einen vergrößerten Fluss in den Lenkzylinder 18 und damit einen größeren Lenkwinkel. Der Fluidfluss durch den hydraulischen Motor 34 steigt auch an, was eine vergrößerte Drehgeschwindigkeit der Ausgangswelle 36 zur Folge hat.

Durch die Messung der Drehrichtung und des Betrags der Drehung der Ausgangswelle 36 des Motors 34 kann der Lenkwinkel festgestellt werden, so dass diese Information innerhalb eines automatischen Lenksystems genutzt werden kann. Bei einem automatischen Lenksystem kann der Winkel des gelenkten Rades als Rückkopplung in einer geschlossenen Schleife verwendet werden. Ein anderer Vorteil dieser Anordnung besteht darin, dass der Winkelsensor 28 in größerem Abstand vom Lenkzylinder 18, der gelenkten Achse und den Rädern 12 angeordnet werden kann.

Vorzugsweise wird der Winkelsensor 28 in einer sichereren Umgebung angeordnet, anstelle in der Nähe der gelenkten Räder 12 oder der Lenkachse. Wenn das erfindungsgemäße Lenksystem beispielsweise an landwirtschaftlicher Ausrüstung verwendet wird, kann der Winkelsensor 28 in einer Kabine des Fahrzeugs oder an einer anderen Stelle positioniert werden, um ihn besser vor Umgebungseinflüssen zu schützen, die die Sensoren beeinträchtigen könnten.

Außerdem brauchen die Sensoren 30 nicht unbedingt mit der Ausgangswelle 36 verbunden zu werden. Wie dargestellt, schlägt die vorliegende Erfindung vor, dass die Halleffektsensoren 30 oder andere kontaktlose (z. B. optische) Sensoren verwendet werden können, um die Richtung und den Betrag der Drehung der Ausgangswelle 36 des Motors 34 zu messen.

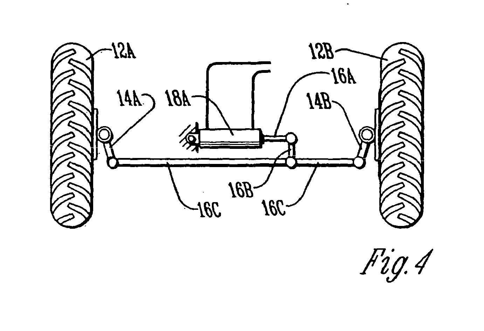

Eine alternative Ausführungsform der Erfindung ist in der Figur 4 gezeigt. Ein doppelt wirkender Zylinder 18A ist an einem Ende schwenkbar am Rahmen des Fahrzeugs angelenkt. Der Zylinder 18A ist durch geeignete hydraulische Schläuche mit denselben Komponenten verbunden, mit denen der Zylinder 18 verbunden ist, wie in Figur 1 dargestellt. Eine sich hin- und herbewegende Kolbenstange 16A erstreckt sich vom anderen Ende des Zylinders 18A. Das äußere Ende der Kolbenstange 16A ist durch ein Gestänge 16B mit einer langgestreckten Verbindungsstange 16C verbunden. Die Verbindungsstange 16C ist durch Gestänge 14A und 14B schwenkbar mit den Rädern 12A und 12B verbunden. Wenn sich die Kolbenstange 16A bewegt, bewegt sich die Verbindungsstange 16C entsprechend, um die Räder 12A und 12B über die Gestänge 14A und 14B jeweils in die eine oder die andere Richtung zu drehen. Diese Anordnung hat alle funktionalen Vorteile der sich auf den Lenkzylinder beziehenden hydraulischen Komponenten der Figur 1.

## Patentansprüche

1. Lenksystem, das einen Lenkzylinder (18), der mit einem lenkbaren Rad (12A, 12B) in Antriebsverbindung steht und mit einem Lenkventil (20) verbunden ist, und einen Winkelsensor (28) zur Erfassung des Lenkwinkels umfasst, **dadurch gekennzeichnet, dass** der Winkelsensor (28) zwischen dem Lenkventil (20) und dem Lenkzylinder (18) angeordnet und eingerichtet ist, den Fluss zum Lenkzylinder (18) und daraus hinaus zu erfassen.

2. Lenksystem nach Anspruch 1, **dadurch gekennzeichnet, dass** er einen hydraulischen Motor (34) umfasst, dessen Ausgangswelle (36) sich abhängig vom Fluss durch den Motor (34) dreht, und dass ein zur Erfassung des Lenkwinkels dienender Sensor (30) eingerichtet ist, die Bewegung der Ausgangswelle (36) des Motors (34) zu erfassen.

3. Lenksystem nach Anspruch 2, **dadurch gekennzeichnet, dass** die Drehrichtung der Ausgangswelle (36) von der Flussrichtung des durch den Motor (34) strömenden Fluids abhängt, und dass der Sensor (30) eingerichtet ist, die Drehrichtung der Ausgangswelle (36) zu erfassen.

4. Lenksystem nach Anspruch 2 oder 3, **dadurch gekennzeichnet, dass** der Sensor (30) eingerichtet ist, den Betrag der Drehung der Ausgangswelle (36) zu erfassen.

5. Lenksystem nach einem der Ansprüche 2 bis 4, **dadurch gekennzeichnet, dass** ein verzahntes Rad (32) auf der Ausgangswelle (36) angeordnet ist, mit dem der Sensor (30) zusammenwirkt.

6. Lenksystem nach einem der Ansprüche 2 bis 5, **dadurch gekennzeichnet, dass** zwei Sensoren (30A, 30B) der Ausgangswelle (36) benachbart angeordnet sind.

7. Lenksystem nach Anspruch 6, **dadurch gekennzeichnet, dass** die zwei Sensoren (30A, 30B) in einer Quadraturanordnung angeordnet sind.

8. Lenksystem nach einem der Ansprüche 2 bis 7, **dadurch gekennzeichnet, dass** der Sensor (30) magnetisch arbeitet und vorzugsweise ein Halleffektsensor ist.

9. Lenksystem nach einem der Ansprüche 1 bis 8, **dadurch gekennzeichnet, dass** er im Abstand vom Lenkzylinder (18) und den Rädern (12) angeordnet ist.

10. Lenksystem nach einem der vorhergehenden Ansprüche, **dadurch gekennzeichnet, dass** das Lenkventil (20) ein 2-Wegeventil ist.

## Claims

1. A steering system comprising a steering cylinder (18), which is connected both to drive a steered wheel (12A, 12B) and to a steering valve (20), and an angle sensor (28) for detecting the steering angle, **characterized in that** the angle sensor (28) is located between the steering valve (20) and the steering cylinder (18) and is arranged to detect the flow to the steering cylinder (18) and from it.

2. A steering system according to claim 1, **characterized in that** it comprises a hydraulic motor (34) whose output shaft (36) turns in dependence on the flow through the motor (34), and **in that** a sensor (30) for detecting the steering angle is arranged to detect the movement of the output shaft (36) of the motor.

3. A steering system according to claim 2, **characterized in that** the direction of rotation of the output shaft (36) depends on the direction of flow of the fluid flowing through the motor (34), and **in that** the sensor (30) is arranged to detect the direction of rotation of the output shaft (36).

4. A steering system according to claim 2 or 3, **characterized in that** the sensor (30) is arranged to detect the amount of the rotation of the output shaft (36).

5. A steering system according to any of claims 2 to 4, **characterized in that** a toothed wheels (32) is arranged on the output shaft (36), with which wheel the sensor (30) cooperates.

6. A steering system according to any of claims 2 to 5, **characterized in that** the two sensors (30A, 30B) of the output shaft (36) are arranged next to one another.

7. A steering system according to claim 6, **characterized in that** the two sensors (30A, 30B) are disposed in a quadrature arrangement.

8. A steering system according to any of claims 2 to 7, **characterized in that** the sensor (30) operates magnetically and is preferably a Hall effect sensor.

9. A steering system according to any of claims 1 to 8, **characterized in that** it is arranged spaced from the steering cylinder (18) and the wheels (12).

10. A steering system according to any of the preceding claims, **characterized in that** the steering valve (20) is a 2-way valve.

## Revendications

1. Système de direction, qui comprend un cylindre de direction (18), lequel est en liaison d'entraînement avec une roue (12A, 12B) dirigeable et est relié à une vanne de direction (20), et un capteur d'angle (28) pour la détection de l'angle de braquage, **caractérisé en ce que** le capteur d'angle (28) est disposé entre la vanne de direction (20) et le cylindre de direction (18) et est aménagé pour détecter le flux allant au cylindre de direction (18) et le flux sortant de celui-ci.

2. Système de direction selon la revendication 1, **caractérisé en ce qu'**il comprend un moteur (34) hydraulique, dont l'arbre de sortie (36) tourne en fonction du flux traversant le moteur (34), et **en ce qu'**un capteur (30) servant à la détection de l'angle de braquage est aménagé pour détecter le déplacement de l'arbre de sortie (36) du moteur (34).

3. Système de direction selon la revendication 2, **caractérisé en ce que** le sens de rotation de l'arbre de sortie (36) dépend du sens de flux du fluide circulant à travers le moteur (34), et **en ce que** le capteur (30) est aménagé pour détecter le sens de rotation de l'arbre de sortie (36).

4. Système de direction selon la revendication 2 ou 3, **caractérisé en ce que** le capteur (30) est aménagé pour détecter la valeur de la course de rotation de l'arbre de sortie (36).

5. Système de direction selon l'une quelconque des revendications 2 à 4, **caractérisé en ce qu'**une roue (32) dentée est disposée sur l'arbre de sortie (36), avec laquelle le capteur (30) coopère.

6. Système de direction selon l'une quelconque des revendications 2 à 5, **caractérisé en ce que** deux capteurs (30A, 30B) de l'arbre de sortie (36) sont disposés à proximité l'un de l'autre.

7. Système de direction selon la revendication 6, **caractérisé en ce que** les deux capteurs (30A, 30B) sont disposés dans un agencement de quadrature.

8. Système de direction selon l'une quelconque des revendications 2 à 7, **caractérisé en ce que** le capteur (30) travaille de façon magnétique et est de préférence un capteur à effet Hall.

9. Système de direction selon l'une quelconque des revendications 1 à 8, **caractérisé en ce qu'**il est disposé à distance du cylindre de direction (18) et des roues (12).

10. Système de direction selon l'une quelconque des revendications précédentes, **caractérisé en ce que** la vanne de direction (20) est une vanne à deux voies.
